(19) Europäisches Patentamt
European Patent Office
Office européen des brevets

(11) **EP 2 449 643 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(21) Anmeldenummer: **10737486.0**

(22) Anmeldetag: **28.06.2010**

(51) Int Cl.:
***H02J 1/00*** *(2006.01)*

(86) Internationale Anmeldenummer:
**PCT/EP2010/003837**

(87) Internationale Veröffentlichungsnummer:
**WO 2011/000505 (06.01.2011 Gazette 2011/01)**

(54) **Verfahren zur Überwachung einzelner Photovoltaikmodule in einer Anordnung, die mehrere Photovoltaikmodule umfasst sowie eine Einrichtung zur Durchführung des vorgenannten Verfahrens**

Method for monitoring individual photovoltaic modules in an arrangement that comprises several photovoltaic modules and device for performing said method

Procédé de surveillance de modules photovoltaïques individuels dans un ensemble comportant plusieurs modules photovoltaïques et dispositif destiné à la réalisation de ce procédé

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.07.2009 DE 102009031839**

(43) Veröffentlichungstag der Anmeldung:
**09.05.2012 Patentblatt 2012/19**

(73) Patentinhaber: **Kruse, Ingmar**
**90409 Nürnberg (DE)**

(72) Erfinder:
• **ROUSTAM, Asimov**
**Minsk, Belarus 220012 (BY)**
• **KRUSE, Ingmar**
**90409 Nürnberg (DE)**

(74) Vertreter: **Stippl, Hubert**
**Patentanwälte**
**Freiligrathstrasse 7a**
**90482 Nürnberg (DE)**

(56) Entgegenhaltungen:
EP-A1- 0 420 295         EP-A1- 0 604 777
WO-A2-2008/125915    JP-A- 2004 260 015

**Beschreibung**

Gegenstand der Erfindung

Die vorliegende Erfindung betrifft zum einen ein Verfahren zur Überwachung einzelner Photovoltaikmodule in einer Anordnung, die mehrere Photovoltaikmodule umfasst, Photovoltaikmodul sowie eine Anordnung zur Erzeugung von elektrischem Strom.

Stand der Technik

Ein gattungsgemäßes Verfahren ist bereits aus der DE 101 36 147 B4 bekannt. Das Verfahren umfasst einen Modulkonverter als Bestandteil eines jeden Solarmoduls, welcher mehrere voneinander getrennte Sensoren zur Messung bestimmter Eigenschaften des Solarmoduls, wie z.B. Gleichspannung, Gleichstrom, Temperatur oder Erschütterung. Die gemessenen Werte werden als Analogsignale einem Mikroprozessor zugeführt, der die Analogsignale in Digitalsignale umwandelt und einem mit einer Sammelschiene in Verbindung stehenden Leistungssteller in Form Ist-Wert zuführt. Dieses bekannte Verfahren hat den Nachteil, dass es hinsichtlich der zu benötigenden Installation aufwendig und teuer ist.

Die WO 2008/125915 offenbart ein System und ein Verfahren zur Überwachung einzelner Solarpanele in einem Verband. Die Datenübertragung an eine zentrale Auswerteinheit erfolgt in Form von unabhängig voneinander übertragenen Datenblöcken.

Die Aufgabe der vorliegenden Erfindung besteht darin, ein gattungsgemäße Verfahren bzw. eine entsprechende Anordnung zur Verfügung zu stellen, die eine Überwachung der Photovoltaikmodule mit schaltungstechnisch einfachen Mitteln und reduzierten Kosten ermöglicht.

Die vorstehende Aufgabe wird in Bezug auf das beanspruchte Verfahren durch ein Verfahren gemäß Anspruch 1, in Bezug auf das beanspruchte Photovoltaikmodul durch ein Photovoltaikmodul gemäß Anspruch 23 sowie in Bezug auf die beanspruchte Anordnung durch eine Anordnung gemäß Anspruch 27 gelöst.

Die weiteren Unteransprüche betreffen vorteilhafte Ausgestaltungen der vorliegenden Erfindung.

Die unabhängige Übermittlung der Datenblöcke bedeutet, dass die Übermittlung der Datensätze von dem einem Photovoltaikmodul über die elektrischen Leitungsmittel keine Rücksicht darauf nimmt, ob nicht auch gleichzeitig ein anderes oder mehrere andere Photovoltaikmodule seine Datenblöcke übermittelt. Es wird bewusst keine Adressierung der einzelnen Photovoltaikmodule aus der Richtung der Auswerteeinheit vorgenommen. Der Microcontroller erfährt keine Adressierung von Seiten der Auswerteeinheit, er ist vielmehr autark. Die Erfindung erlaubt es daher, bei vergleichsweise niedrigen Investitionskosten eine effiziente Überprüfung der Leistungsfähigkeit einzelner Photovoltaikmodule in Anordnungen umfassend eine Vielzahl von Photovoltaikmodulen durchzuführen. Da die Anordnung keine zusätzliche Verdrahtung oder Verkabelung oder Photovoltaikmodulzugeordneten eigenen Energiequellen notwendig macht, besteht die Möglichkeit, auch bestehende Anlagen unter geringem Investitionsaufwand entsprechend nachzurüsten. Hierdurch kann die Effizienz von Photovoltaikanlagen mit einfachen Nachrüstmaßnahmen erheblich gesteigert werden.

Die auf den ersten Blick zu erwartenden Nachteile eines unidirektionalen Datenübermittlungsverfahrens wie Kollision von Datenblöcken während der Übertragung, keine Adressierung der einzelnen Photovoltaikmodule von einer zentralen Auswertestelle ausgehend, werden bewusst in Kauf genommen, da die zu erreichenden Vorteile bei weitem überwiegen.

Eine zweckmäßige Ausgestaltung der vorliegenden Erfindung wird nachstehend anhand von Zeichnungen näher erläutert. Es zeigen:

Fig. 1    eine schematische Gesamtdarstellung einer Photovoltaikanlage gemäß einer Ausgestaltung der vorliegenden Erfindung,

Fig. 2    eine stark vereinfachte schematische Prinzipschaltskizze eines Photovoltaikmoduls gemäß einer Ausgestaltung der vorliegenden Erfindung,

Fig. 3    eine stark vereinfachte schematische Darstellungsweise von Datenblöcken zur Übertragung an die Auswerteinheit,

Fig. 4    eine stark vereinfachte Prinzipschaltbilddarstellung zur Gewährleistung einer Diebstahlsüberwachung.

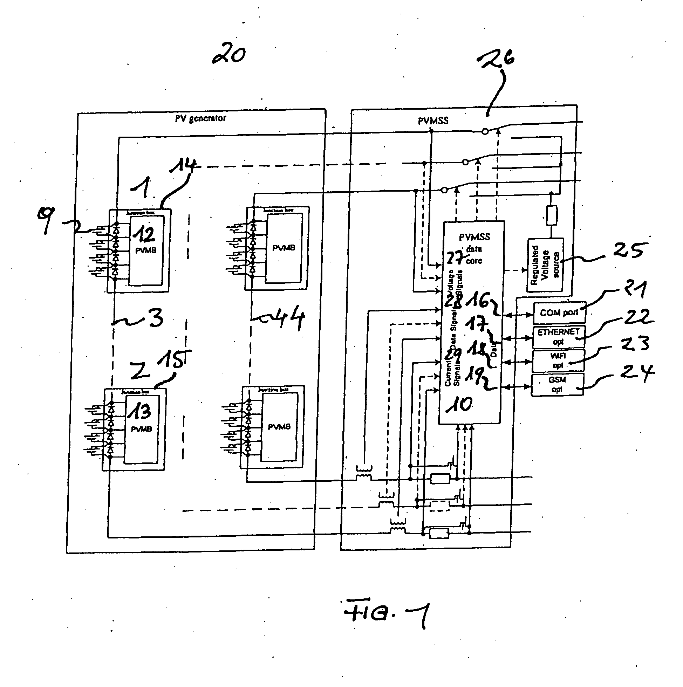

Figur 1 zeigt eine Photovoltaikanlage 20 zur Erzeugung von elektrischer Energie aus Sonnenenergie. Die Photovoltaikanlage umfasst eine Vielzahl von Photovoltaikmodulen 1, 2, die untereinander über herkömmliche elektrische Leitungsmittel 3 bzw. 4 in Form einer Reihe (Reihenschaltung) verbunden sind. Die aus der Darstellung nach Figur 1 ersichtliche Anordnung umfasst insgesamt zwei Reihen von Photovoltaikmodulen, wobei die Photovoltaikmodule 1, 2 über die elektrischen Leitungsmittel 3 die weiteren, in Figur 1 dargestellten Photovoltaikmodule über die elektrischen Leitungsmittel 4 untereinander verbunden sind. In Figur 1 ist es angedeutet, dass auch noch weitere Reihenschaltungen von Photovoltaikmodulen denkbar sind.

Die elektrischen Leitungsmittel 3 und 4 dienen dazu, den durch die Vielzahl von Photozellen 9 des jeweiligen Photovoltaikmoduls z.B. 1 oder 2 erzeugten Strom einem (jeweils nicht dargestellten) Verbraucher, Speicher oder dergleichen zuzuleiten.

Jedem Photovoltaikmodul z.B. 1 oder 2 ist eine Prüfeinrichtung 12 bzw. 13 zugeordnet. Diese Prüfeinrichtung 12, 13 befindet sich zweckmäßigerweise in der so genannten Verbindungsbox (Junction Box) 14, 15, welche das Photovoltaikmodul mit dem elektrischen Leitungsmittel 3 bzw. 4 verbindet.

Mit dem jeweiligen Photovoltaikmodul z.B. 1 oder 2 der Photovoltaikanlage 20 steht eine zentrale Auswerteeinheit 10 über die betreffenden elektrischen Leitungsmittel z.B. 3 oder 4 in Verbindung. Die Auswerteeinheit 10 ist dazu vorgesehen, Informationen zum Status (z.B. Spannung, Temperatur und/oder Stromstärke etc.) von den einzelnen Photovoltaikmodulen z.B. 1 bzw. 2 zu empfangen, auszuwerten und notfalls gegebene Maßnahmen (Austausch von Photozellen oder Photovoltaikmodulen, Zuschnitt von abschattenden Bepflanzungen, Reinigung der Oberflächen, Beseitigung von Sturmschäden an Leitungen etc.) einzuleiten.

Die Auswerteeinheit besitzt unterschiedliche Schnittstellen 16, 17, 18, 19 zur Verbindung der Auswerteeinheit 10 mit den gewünschten Datenausgabe- bzw. Datenübertragungseinrichtungen wie z.B. einem Com-Port 21, einer optischen Schnittstelle 22, einem Internetanschluss 23 und/oder einem GSM-Anschluss 24.

Zum Betrieb der Auswerteeinheit 10 ist eine Energiequelle 25 vorgesehen. Mittels einer Schalteinrichtung 26 ist es möglich, die Auswerteeinheit 10 auf die jeweilige Reihe der einzelnen Photovoltaikmodule z.B. 1 bzw. 2 aufzuschalten.

Die Auswerteeinheit 10 weist Eingänge (Spannungseingang 27), (Dateneingang 28) sowie (Stromsignaleingang 29) auf. Die vorgenannten Eingänge 27 bis 29 stehen mit den elektrischen Leitungsmitteln 3 in Verbindung.

Die Energie für den Betrieb der Prüfeinrichtung 12, 13 wird erfindungsgemäß direkt in Form der elektrischen Energie aus den Photovoltaikmodulen 1, 2 zur Verfügung gestellt. Es ist daher im Bereich der Photovoltaikmodule keine zusätzliche Energiequelle oder eine zusätzliche Versorgungsverkabelung notwendig. Vielmehr kann die bereits vorhandene Standardverdrahtung bzw. -verkabelung verwendet werden.

Allerdings steht, sofern kein Sonnenlicht vorhanden ist, auch keine Leistung für die Prüfeinrichtung 12, 13 zur Verfügung. Dies ist jedoch akzeptierbar, da die Feststellung der Statusparameter des jeweiligen Photovoltaikmoduls in einer Zeit, wenn Sonnenlicht zur Verfügung steht, genügt.

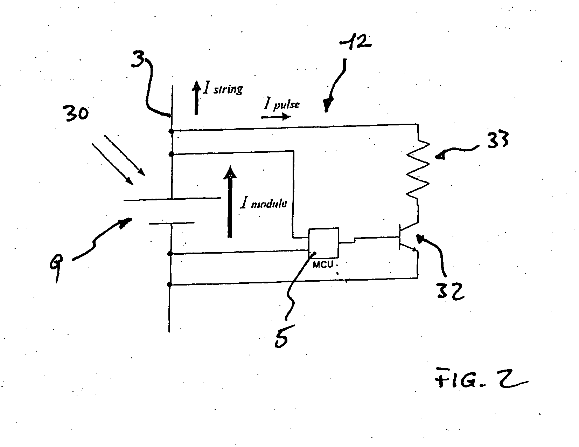

Figur 2 zeigt die vereinfachte Prinzipschaltung zur Feststellung mindestens eines Statusparameters des jeweiligen Photovoltaikmoduls, z.B. des in Figur 2 dargestellten Photovoltaikmoduls 1. Der Einfachheit halber ist in Figur 2 lediglich eine Photozelle 9 wiedergegeben, wobei in Wirklichkeit eine Mehrzahl von Photozellen 9 einer in Figur 2 dargestellten Schaltung zugeordnet sind. Wie aus Figur 2 ersichtlich, wird bei Einstrahlung von Photonen 30 innerhalb der Photozelle 9 ein Strom I erzeugt, welcher in die elektrische Leitung 3 eingespeist wird.

Die Prüfeinrichtung 12 bzw. 13 umfasst des Weiteren einen Microcontroller 5, der mit einem eigenen (nicht dargestellten) Generator sowie einer eigenen Steuersoftware versehen die nötigen Operationen durchführen kann. Der Microcontroller 5 umfasst Mittel zur Statusparameterfeststellung, wie z.B. eine Einrichtung zur Erfassung der elektrischen Spannung. Die Prüfeinrichtung 12 bzw. 13 beinhaltet Mittel zur Erzeugung von Stromimpulsen, die als Daten am Ende der elektrischen Leitungsmittel 3 auslesbar sind. Hierzu weist die Prüfeinrichtung 12 eine Shunt-Schaltung auf, die einen Widerstand 33 sowie einen Transistor 32, der vom Microcontroller 5 angesteuert wird, auf. Mit dieser Schaltung wird im elektrischen Leitungsmittel 3 ein Stromabfallimpuls erzeugt.

In dem Microcontroller 5 wird eine Binärcode-Struktur unter Zuhilfenahme eines geeigneten Musters in eine besondere Abfolge entsprechender Stromabfallimpulse umgewandelt.

Die Verwendung des Shunts ermöglicht die Erzeugung eines Datensignals durch Strommodulation. Es werden mittels des Microcontrollers 5 in Zusammenhang mit dem Shunt Stromimpulse als Datenelemente erzeugt und in die elektrischen Leitungsmittel 3 zur Übermittlung der Daten eingespeist.

Zusätzlich mit den zu übermittelnden Statusdaten wird auch die individuelle Seriennummer des Photovoltaikmoduls 1 bzw. 2 sowie Plausibilitätsdaten auf diese Weise kodiert und in die elektrischen Leitungsmittel eingespeist.

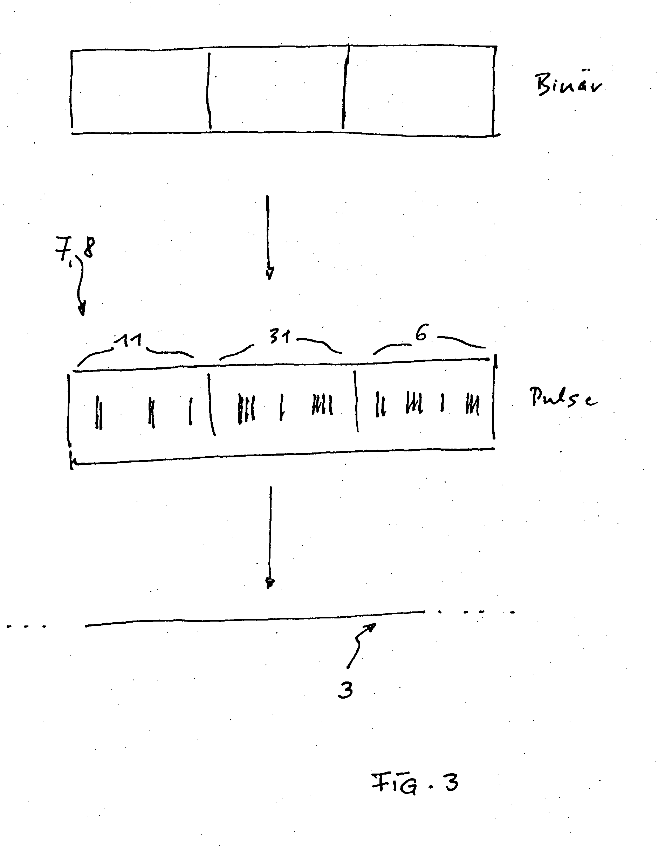

Der Microcontroller 5 generiert aus einer binären Bitsequenz entsprechend der in Fig. 2 dargestellten Schaltungsmöglichkeit Stromimpulse, die in die elektrischen Leitungsmittel 3 eingespeist werden. Wie aus Figur 3 ersichtlich, umfasst ein Datenblock, z.B. der Datenblock 7, Datenelemente 11, die das jeweilige Photovoltaikmodul z.B. 1 identifizieren, Datenelemente 31 betreffend die jeweiligen Statusdaten des zugehörigen Photovoltaikmoduls wie z.B. Spannung etc. sowie Datenelemente 6, die Plausibilitätsdaten beinhalten. Die Erzeugung sowie Übermittlung dieser Daten erfolgt in Form von Impulsen in Zeitfenstern (Frames). Die Puls- oder Bitsequenz innerhalb eines solchen Zeitfensters bzw. Datenelements 11 oder 31 wird in einer pseudo-zufälligen Art erzeugt, um eine geringere elektromagnetische Induktion (EMI) zu begründen und hierdurch das Rauschen zu begrenzen. Dies kann beispielsweise dadurch erfolgen, dass ein "reguläres" Bit durch eine vom Microcontroller zu erzeugende Bitsequenz also mehrere Bits ersetzt wird, wobei diese Sequenz von der Auswerteeinheit wiederum ausgelesen werden kann. Die Reihenfolge der Bits dieser Bitsequenz kann beispielsweise auf pseudo-zufällige Art erzeugt werden. Die Reihenfolge einer pseudozufälligen Zahl ist Reihenfolge von den Zahlen, die durch irgendeinen definierten arithmetischen Prozeß berechnet werden kann und dies für die Auslesung genutzt werden kann.

Es handelt sich um eine unidirektionale Datenübertragung. Die Photovoltaikmodule einer Photovoltaikanlage 20 übermitteln ihre Datenblöcke z.B. 7 unabhängig voneinander, so dass die Wahrscheinlichkeit einer Kollision von Datenblöcken innerhalb der elektrischen Leitungsmittel 3 bzw. 4, die die einzelnen Photovoltaikmodule z.B. 1 oder 2 untereinander verbinden, größer 0 ist. Die vorgenannte unabhängige Übermittlung der Datenblöcke 7, 8 bedeutet, dass die Übermittlung der Datensätze von dem einem Photovoltaikmodul über die elektrischen Leitungsmittel 3 bzw. 4 keine Rücksicht darauf nimmt, ob nicht auch gleichzeitig ein anderes oder mehrere andere Photovoltaikmodule seine Datenblöcke übermittelt. Es wird keine Adressierung der einzelnen Photovoltaikmodule aus der Richtung der Auswerteeinheit 10 vorgenommen. Der Microcontroller 5 erfährt keine Adressierung von Seiten der Auswerteeinheit, er ist vielmehr autark.

Jeder Microcontroller 5 wartet eine, insbesondere zufällig zu generierende, Verzögerungszeit $T_w$, bis ein Datenblock 7, 8 in die elektrischen Leitungsmittel 3 eingespeist wird (vgl. Fig. 3). Die mittlere zufällige Verzögerungszeit $\Delta T_w$ folgende Bedingung erfüllt

$$\Delta T_w \geq N \cdot T_D / \Delta C_R$$

wobei N die Anzahl der Photovoltaikmodule in der Reihe darstellt, $T_D$ die Zeit ist, die für die Übertragung eines Datenblocks notwendig ist und $\Delta C_R$ die mittlere Fehlerrate aufgrund der Kollision von Datenblöcken darstellt. Die mittlere Fehler-rate $\Delta C_R$ liegt vorzugsweise in einem Bereich von $10^{-1}$ bis $10^{-6}$, vorzugsweise $10^{-2}$ bis $10^{-5}$. Bei einem Wert von zum Beispiel $10^{-3}$ gibt es eine Kollision bei 1000 Datenblöcken.

Die Dauer der Übertragung eines Datenblocks 11 oder 12 beträgt beispielsweise ca. 2 ms. Wird von einer durchschnittlichen Übertragungsrate der Datenblöcke von 15 Sekunden bei einer Anzahl von 8 Photovoltaikmodulen in einer Reihe ausgegangen, so geht lediglich ein Datenblock von tausend Datenblöcken durch Kollision verloren.

Anhand der Plausibilitätsdaten besteht die Möglichkeit, dass die Auswerteeinheit 10 im Falle einer Kollision von Datenblöcken 7, 8, bei der die Datenblöcke verändert werden, diese veränderten, d.h. defekten Datenblöcke selektiv aussondern.

Als Microcontroller 5 einen herkömmlichen 8-Bit-Microcontroller mit TimerFunktion (z.B. SOIC20, 8 Bit/8ch ADC) zum Einsatz kommen.

Die über die elektrischen Leitungsmittel übertragenen Datenblöcke werden in der Auswerteeinheit 10 eingelesen, und zwar zum einen die Datenelemente 11 betreffend die Identifizierung des konkreten Photovoltaikmoduls sowie die Datenelemente 31 betreffend die Statusparameter des jeweiligen Photovoltaikmoduls wie z.B. der gemessene Strom. Das Auslesen dieser Daten erfolgt in der Auswerteeinheit 10 z.B. über den Einsatz eines Shunt-Widerstands, der lediglich phasenweise aufgeschaltet wird.

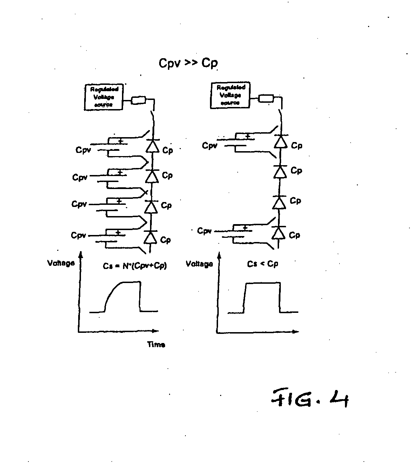

Figur 4 zeigt die Anordnung mehrerer Photovoltaikmodule in einer Reihe, wobei die Spannung, die durch eine Photovoltaikmodulreihe erzeugt wird, gemessen wird. Die Summe aller von den einzelnen Prüfeinrichtungen 11, 12 ausgelesenen Spannungen sollte der durch die Auswerteeinheit 10 tatsächlich gemessenen Spannung entsprechen. Dies ermöglicht es, die Energie der Einrichtung auf direktem Wege zu ermitteln. Darüber hinaus kann eine Diebstahlsicherung realisiert werden, wenn die Prüfeinrichtungen 11, 12 wegen unzureichender Sonnenaktivität nicht in Betrieb sind. Aufgrund dieser Technologie liegt die innere Kapazität Cpv um einige Grade höher als die Kapazität der Schutzdiode Cp in der Verbindungsbox 14 bzw. 15 (Junction Box). Die Kapazität von N-Photovoltaikmodulen entlang einer Reihe beträgt Cs = N x (Cpv + Cp). Für den Fall, dass ein oder mehrere Photovoltaikmodule entkoppelt werden, wird der Wert Cs wesentlich kleiner als Cp, so dass daraus eine Information für einen Diebstahl oder eine entsprechende Situation gegeben ist.

Die Auswerteeinheit 10 ist dazu vorgesehen, auf verschiedenste Art und Weise Daten zur Verfügung zu stellen, wie das bereits eingangs beschrieben worden ist.

Es wird ausdrücklich darauf hingewiesen, dass auch Teilkombinationen von Merkmalen der beschriebenen Ausführungsform als erfindungswesentlich beansprucht sind.

BEZUGSZEICHENLISTE

| | |
|---|---|
| 1 | Photovoltaikmodul |
| 2 | Photovoltaikmodul |
| 3 | elektrische Leitungsmittel |
| 4 | elektrische Leitungsmittel |
| 5 | Microcontroller |
| 6 | Datenelement |
| 7 | Datenblock |
| 8 | Datenblock |
| 9 | Photozelle |
| 10 | Auswerteeinheit |
| 11 | Datenelement |
| 12 | Prüfeinrichtung |
| 13 | Prüfeinrichtung |
| 14 | Verbindungsbox |
| 15 | Verbindungsbox |
| 16 | Schnittstelle |
| 17 | Schnittstelle |
| 18 | Schnittstelle |
| 19 | Schnittstelle |
| 20 | Photovoltaikanlage |
| 21 | Com-Port |
| 22 | optische Schnittstelle |
| 23 | Internetanschluss |
| 24 | GSM-Anschluss |
| 25 | Energiequelle |

26   Schaltmittel
27   Spannungseingang
28   Dateneingang
29   Stromsignaleingang
30   Photonen
31   Datenelement
32   Diode
33   Widerstand


**Patentansprüche**

1.   Verfahren zur Überwachung von Photovoltaikmodulen (1, 2), welche in einer Anordnung, bestehend aus mehreren, insbesondere in Reihe über eine elektrische Leitungsmittel (3) geschalteten Photovoltaikmodulen, im Einsatz sind, wobei
dem jeweiligen Photovoltaikmodul (1, 2) ein eigener Microcontroller (5) zugeordnet ist,
eine, insbesondere fortlaufende, Feststellung mindestens eines Statusparameters des jeweiligen Photovoltaikmoduls (1, 2) durch den Microcontroller (5) durchgeführt wird,
die den Statusparameter betreffenden Daten an eine Auswerteeinheit (10) übertragen werden,
die zur Übertragung an die Auswerteeinheit (10) vorgesehenen Daten in Form von Datenblöcken (7, 8) konzipiert sind,
zur Übertragung der Datenblöcke (7, 8) die zur Verschaltung der einzelnen Pholovoltaikmodule (1) vorhandenen elektrischen Leitungsmittel (3) genutzt werden,
die Datenblöcke (7, 8) unabhängig voneinander übertragen werden, so dass die Wahrscheinlichkeit der Kollision von Datenblöcken (7, 8) untereinander größer 0 ist,
jeder Microcontroller (5) eine zufällig zu generierende, Verzögerungszeit $T_w$ wartet, bis ein Datenblock (7, 8) in die elektrischen Leitungsmittel (3) eingespeist wird, **dadurch gekennzeichnet, dass**
die mittlere zufällige Verzögerungszeit $\Delta T_w$ folgende Bedingung erfüllt

$$\Delta T_w \geq N \cdot T_D / \Delta C_R$$

wobei N die Anzahl der Photovoltaikmodule in der Reihe darstellt, $T_D$ die Zeit ist, die für die Übertragung eines Datenblocks notwendig ist und $\Delta C_R$ die mittlere Fehlerrate aufgrund der Kollision von Datenblöcken darstellt.

2.   Verfahren nach Anspruch 1
**dadurch gekennzeichnet, dass**
der Microcontroller (5) des einen Photovoltaikmoduls (z.B. 1) unabhängig von dem Microcontroller der weiteren Photovoltaikmoduls (z.B. 2) Datenblöcke (7 bzw. 8) generiert und diese in die elektrischen Leitungsmittel (3) einspeist.

3.   Verfahren nach Anspruch 1,
**dadurch gekennzeichnet, dass**
die mittlere Fehlrate $\Delta C_R$ in einem Bereich von $10^{-1}$ bis $10^{-6}$, vorzugsweise von $10^{-2}$ bis $10^{-5}$ liegt.

4.   Verfahren nach einem der vorhergehenden Ansprüche,
**dadurch gekennzeichnet, dass**
zur Bildung von Daten für die Datenblöcke (7, 8) der in dem elektrischen Leitungsmittel (z.B. 3) befindliche Strom verändert, insbesondere moduliert wird.

5.   Verfahren nach Anspruch 4,
**dadurch gekennzeichnet, dass**
aus einer Bit-Sequenz im Microcontroller (5) eine Sequenz von Modulationsimpulsen in dem elektrischen Leitunsmittel (z.B. 3) erzeugt wird.

6.   Verfahren nach einem der vorhergehenden Ansprüche,
**dadurch gekennzeichnet, das**
die Energie zur Übertragung der Datenblöcke (7, 8) vom Photovoltaikmodul (1, 2) selbst bezogen wird.

7.   Verfahren nach Anspruch 4,
**dadurch gekennzeichnet, dass**
der Datenblock (7, 8) aus einzelnen Datenelementen (11, 31, 6) aufgebaut ist.

8.   Verfahren nach Anspruch 7,
**dadurch gekennzeichnet, dass**
der Datenblock (7, 8) Datenelemente (11) zur Identifizierung der jeweiligen Photovoltaikmodule (1, 2) aufweist.

9.   Verfahren nach Anspruch 7 oder 8,
**dadurch gekennzeichnet, dass**
der Datenblock (7, 8) Datenelemente (31) betreffend Statusparameter der jeweiligen Photovoltaikmodule (1, 2) aufweist.

10.  Verfahren nach Anspruch 9,
**dadurch gekennzeichnet, dass**
als Statusparameter die elektrische Spannung festgestellt wird.

11.  Verfahren nach Anspruch 7 bis 10,
**dadurch gekennzeichnet, dass**
der Datenblock (7, 8) Datenelemente (6) für einen Plausibilitätscheck aufweist.

12.  Verfahren nach einem der vorhergehenden Ansprüche,
**dadurch gekennzeichnet, dass**
die Zeichenfolge oder Bitfolge innerhalb des Datenblocks (7, 8) auf dem Pseudo-Zufallsprinzip erzeugt wird.

**13.** Verfahren nach einem der vorhergehenden Ansprüche,
**dadurch gekennzeichnet, dass**
die Übertragung der jeweiligen Datenblöcke (7, 8) in festgelegten, insbesondere gleich bleibenden Zeitabständen erfolgt.

**14.** Verfahren nach einem der vorhergehenden Ansprüche,
**dadurch gekennzeichnet, dass**
die Überprüfung des Vorhandenseins von Datenblöcken (7, 8), bei denen eine schädigende Beeinträchtigung insbesondere eine Kollision stattgefunden hat, durch einen Plausibilitätscheck anhand des Datenelements (6) auf Seiten einer Auswerteeinheit (10) durchgeführt wird.

**15.** Verfahren nach einem der vorhergehenden Ansprüche,
**dadurch gekennzeichnet, dass**
die serielle Nummer jedes Photovoltaikmoduls (1) dazu verwendet wird, die Bildung der Zeichensequenz innerhalb des Datenblocks zu initialisieren.

**16.** Verfahren nach einem der vorhergehenden Ansprüche,
**dadurch gekennzeichnet, dass**
in einer gemeinsamen Auswerteeinheit (10) eine Gleichstrommessung durchgeführt wird.

**17.** Verfahren nach einem der vorhergehenden Ansprüche,
**dadurch gekennzeichnet, dass**
in der gemeinsamen Auswerteeinheit (10) eine Kapazitätsmessung durchgeführt wird.

**18.** Verfahren nach einem der vorhergehenden Ansprüche,
**dadurch gekennzeichnet, dass**
eine Spannungsmessung durchgeführt wird.

**19.** Verfahren nach einem der vorhergehenden Ansprüche,
**dadurch gekennzeichnet, dass**
eine Kapazitätsmessung durchgeführt wird.

**20.** Verfahren nach einem der vorhergehenden Ansprüche,
**dadurch gekennzeichnet, dass**
als Statusparameter die Spannung, die Temperatur und/oder die Stromstärke ermittelt werden.

**21.** Photovoltaikmodul zur Durchführung des Verfahrens nach einem der vorhergehenden Ansprüche, mit

mindestens einer, vorzugsweise einer Mehrzahl von miteinander verschalteten Photovoltaikzellen (9), einer Verbindungsbox (14, 15) zur Verbindung der Photovoltaikzellen (9) mit einem elektrischen Leitungsmittel (3, 4), einer Prüfeinrichtung (12), welche Statusparameter des betreffenden Photovoltaikmoduls (1) feststellt und diese in Form von Datenblöcken (7) unabhängig von der Einspeisung von Datenblöcken (8) von Prüfeinrichtungen (13) anderer Photovoltaikmodule (2) in die elektrischen Leitungsmittel (3, 4) einspeist,
die Prüfeinrichtung (12, 13) einen Microcontroller (5) umfasst, der die Übertragung der Datenblöcke (7, 8) mittels Modulation des in dem elektrischen Leitungsmittel (3, 4) zur Verfügung stehenden Stroms vornimmt, und der Microcontroller (5) eine Einrichtung zur Spannungsmessung, Temperaturmessung und/oder Stromstärkemessung aufweist; **dadurch gekennzeichnet, dass**
die Prüfeinrichtung (12, 13) zur Strommodulation eine Shunt-Schaltung umfasst.

**22.** Anordnung zur Erzeugung von elektrischem Strom aus Sonnenenergie umfassend
eine Mehrzahl von Photovoltaikmodulen (1, 2), Verbindungsmittel (3, 4), die dazu vorgesehen sind, die einzelnen Photovoltaikmodule (1, 2) zu einer Reihe zu verbinden,
wobei jedem Photovoltaikmodul (1, 2) eine Prüfrichtung (12, 13) zur Erfassung von Statusparametern des zugehörigen Photovoltaikmoduls zugeordnet ist,
eine Auswerteeinheit (10), die dazu vorgesehen ist, die Signale der Prüfeinrichtung (12, 13) zu empfangen und weiterzuverarbeiten, die Signale jeder Prüfeinrichtung (12 bzw. 13) als Datenblöcke (7 bzw. 8) erzeugt werden, und
die Signale der jeweiligen Prüfeinrichtung (z.B. 12) unabhängig von der Einspeisung von Datenblöcken (z.B. 8) anderer Prüfeinrichtungen (z.B. 13) in das elektrische Leitungsmittel (3) eingespeist werden, so dass die Wahrscheinlichkeit der Kollision von Datenblöcken (7 bzw. 8) unterschiedlicher Photovoltaikmodule (1 bzw. 2) größer 0 ist und jeder Microcontroller (5) eine zufällig zu generierende, Verzögerungszeit $T_w$ wartet, bis ein Datenblock (7, 8) in die elektrischen Leitungsmittel (3) eingespeist wird; **dadurch gekennzeichnet, dass**
die mittlere zufällige Verzögerungszeit $\Delta T_w$ folgende Bedingung erfüllt

$$\Delta T_w \geq N \cdot T_D / \Delta C_R$$

wobei N die Anzahl der Photovoltaikmodule in der Reihe darstellt, $T_D$ die Zeit ist, die für die Übertragung eines Datenblocks notwendig ist und $\Delta C_R$

die mittlere Fehlerrate aufgrund der Kollision von Datenblöcken darstellt.

23. Anordnung nach Anspruch 22,
**dadurch gekennzeichnet, dass**
in der Auswerteeinheit (10) die Datenblöcke (7, 8) einer Plausibilitätsprüfung unterzogen werden.

24. Anordnung nach Anspruch 23,
**dadurch gekennzeichnet, dass**
die Auswerteeinheit (10) einen Mischsignalprozessor umfasst, der die Datenblöcke empfängt und eine Auswertung anhand einer Erfassung der Stromimpulse vörnimmt.

**Claims**

1. Method for monitoring photovoltaic modules (1, 2) that are used in an arrangement comprising a plurality of photovoltaic modules that are particularly connected in series via an electrical line means (3), wherein
the respective photovoltaic module (1, 2) has an associated dedicated microcontroller (5),
in particular progressive establishment of at least one status parameter for the respective photovoltaic module (1, 2) is carried out by the microcontroller (5),
the data relating to the status parameter are transmitted to an evaluation unit (10),
the data provided for transmission to the evaluation unit (10) are designed in the form of data blocks (7, 8),
the data blocks (7, 8) are transmitted by using the electrical line means (3) that are present for connecting up the individual photovoltaic modules (1),
the data blocks (7, 8) are transmitted independently of one another, as a result of which the probability of collision of data blocks (7, 8) with one another is greater than 0,
each microcontroller (5) waits for a randomly generatable delay time $T_w$ until data block (7, 8) is fed into the electrical line means (3), **characterized in that** the average random delay time $\Delta T_W$ satisfies the following condition

$$\Delta T_w \geq N \cdot T_D / \Delta C_R$$

where N is the number of photovoltaic modules in the series, $T_D$ is the time that is necessary for transmitting a data block and $\Delta C_R$ is the average error rate on account of the collision of data blocks.

2. Method according to Claim 1,
**characterized in that**
the microcontroller (5) of one photovoltaic module (e.g. 1) generates data blocks (7 and 8) independently of the microcontroller of the further photovoltaic module (e.g. 2) and feeds said data blocks into the electrical lines means (3).

3. Method according to Claim 1,
**characterized in that**
the average error rate $\Delta C_R$ is in a range from $10^{-1}$ to $10^6$, preferably from $10^{-2}$ to $10^{-5}$.

4. Method according to one of the preceding claims,
**characterized in that**
data from the data blocks (7, 8) are formed by altering, particularly modulating, the current that is in the electrical line means (e.g. 3).

5. Method according to Claim 4,
**characterized in that**
a sequence of modulation pulses in the electrical line means (e.g. 3) is produced from a bit sequence in the microcontroller (5).

6. Method according to one of the preceding claims,
**characterized in that**
the power for transmitting the data blocks (7, 8) is drawn from the photovoltaic module (1, 2) itself.

7. Method according to Claim 4,
**characterized in that**
the data block (7, 8) is constructed from individual data elements (11, 31, 6).

8. Method according to Claim 7,
**characterized in that**
the data block (7, 8) has data elements (11) for identifying the respective photovoltaic modules (1, 2).

9. Method according to Claim 7 or 8,
**characterized in that**
the data block (7, 8) has data elements (31) relating to status parameters for the respective photovoltaic modules (1, 2).

10. Method according to Claim 9,
**characterized in that**
the electrical voltage is established as a status parameter.

11. Method according to Claims 7 to 10,
**characterized in that**
the data block (7, 8) has data elements (6) for a plausibility check.

12. Method according to one of the preceding claims,
**characterized in that**
the character string or bit string within the data block (7, 8) is produced on the pseudo random principle.

13. Method according to one of the preceding claims,

**characterized in that**
the respective data blocks (7, 8) are transmitted at stipulated, in particular constant, intervals of time.

14. Method according to one of the preceding claims, **characterized in that**
the check on the presence of data blocks (7, 8) for which damaging impairment, particularly a collision, has taken place is performed by a plausibility check using the data element (6) on an evaluation unit (10).

15. Method according to one of the preceding claims, **characterized in that**
the serial number of each photovoltaic module (1) is used to initialize the formation of the character sequence within the data block.

16. Method according to one of the preceding claims, **characterized in that**
direct-current measurement is carried out in a shared evaluation unit (10).

17. Method according to one of the preceding claims, **characterized in that**
capacitance measurement is carried out in the shared evaluation unit (10).

18. Method according to one of the preceding claims, **characterized in that**
voltage measurement is carried out.

19. Method according to one of the preceding claims, **characterized in that**
capacitance measurement is carried out.

20. Method according to one of the preceding claims, **characterized in that**
the voltage, the temperature and/or the current level are.ascertained as status parameters.

21. Photovoltaic module for carrying out the method according to one of the preceding claims, having at least one, preferably a plurality of interconnected, photovoltaic cell(s) (9),
a junction box (14, 15) for connecting the photovoltaic cells (9) to an electrical line means (3, 4), a checking device (12) that establishes status parameters for the photovoltaic module (1) in question and feeds them into the electrical line means (3, 4) in the form of data blocks (7) independently of the feeding of data blocks (8) by checking devices (13) of other photovoltaic modules (2),
the checking device (12, 13) comprises a microcontroller (5) that transmits the data blocks (7, 8) by means of modulation of the current that is available in the electrical line means (3, 4), and
the microcontroller (5) has a device for voltage measurement, temperature measurement and/or current level measurement; **characterized in that** the checking device (12, 13) comprises a shunt circuit for current modulation.

22. Arrangement for producing electric current from solar energy comprising
a plurality of photovoltaic modules (1, 2),
connecting means (3, 4) that are provided in order to connect the individual photovoltaic modules (1, 2) to
form a series,
wherein each photovoltaic module (1, 2) has an associated checking device (12, 13) for capturing status parameters for the associated photovoltaic module,
an evaluation unit (10) that is provided in order to receive and process further the signals from the checking device (12, 13), the signals from each checking device (12 and 13) being produced as data blocks (7, 8), and
the signals from the respective checking device (e.g. 12) are fed into the electrical line means (3) independently of the feeding of data blocks (e.g. 8) from other checking devices (e.g. 13),
as a result of which the probability of collision of data blocks (7 and 8) from different photovoltaic modules (1 and 2) is greater than 0 and each microcontroller (5) waits for a randomly generatable delay time $T_w$ until a data block (7, 8) is fed into the electrical line means (3); **characterized in that**
the average random delay time $\Delta T_W$ satisfies the following condition

$$\Delta T_w \geq N \cdot T_D / \Delta C_R$$

where N is a number of photovoltaic modules in the series, $T_D$ is the time that is necessary for the transmission of a data block and $\Delta C_R$ is the average error rate on account of the collision of data blocks.

23. Arrangement according to Claim 22, **characterized in that**
the data blocks (7, 8) are subjected to a plausibility check in the evaluation unit (10).

24. Arrangement according to Claim 23, **characterized in that**
the evaluation unit (10) comprises a mix signal processor that receives the data blocks and performs evaluation on the basis of capture of the current pulses.

**Revendications**

1. Procédé de surveillance de modules photovoltaïques (1, 2) qui sont utilisés dans un arrangement composé de plusieurs modules photovoltaïques, notamment branchés en série par le biais de moyens de ligne électriques (3), selon lequel un microcontrôleur (5) propre est associé au module photovoltaïque (1, 2) correspondant,
une détermination, notamment en continu, d'au moins un paramètre d'état du module photovoltaïque (1, 2) correspondant est effectuée par le microcontrôleur (5), les données concernant le paramètre d'état sont transmises à une unité d'interprétation (10),
les données qui sont destinées à être transmises à l'unité d'interprétation (10) sont conçues sous la forme de blocs de données (7, 8),
les moyens de ligne électriques (3) présents pour l'interconnexion des modules photovoltaïques (1) individuels sont utilisés pour la transmission des blocs de données (7, 8),
les blocs de données (7, 8) sont transmis indépendamment les uns des autres, de sorte que la probabilité de collision des blocs de données (7, 8) entre eux est supérieure à 0,
chaque microcontrôleur (5) attend pendant un temps de retard $T_w$ à générer de manière aléatoire jusqu'à ce qu'un bloc de données (7, 8) soit injecté dans les moyens de ligne électriques (3), **caractérisé en ce que** le temps de retard aléatoire moyen $\Delta T_W$ remplit la condition suivante

$$\Delta T_w \geq N \cdot T_D / \Delta C_R$$

où N désigne le nombre de modules photovoltaïques dans la série, $T_D$ le temps nécessaire pour la transmission d'un bloc de données et $\Delta C_R$ le taux d'erreurs moyen en raison d'une collision des blocs de données.

2. Procédé selon la revendication 1, **caractérisé en ce que** le microcontrôleur (5) d'un module photovoltaïque (par exemple 1) génère des blocs de données (7 ou 8) et les injecte dans les moyens de ligne électriques (3) indépendamment du microcontrôleur de l'autre module photovoltaïque (par exemple 2).

3. Procédé selon la revendication 1, **caractérisé en ce que** le taux d'erreurs moyen $\Delta C_R$ se trouve dans une plage de $10^{-1}$ à $10^{-6}$, de préférence de $10^{-2}$ à $10^{-5}$.

4. Procédé selon l'une des revendications précédentes, **caractérisé en ce que** pour la formation de données pour les blocs de données (7, 8), le courant qui se trouve dans les moyens de ligne électriques (par exemple 3) est modifié, notamment modulé.

5. Procédé selon la revendication 4, **caractérisé en ce**

qu'une séquence d'impulsions de modulation est générée dans les moyens de ligne électriques (par exemple 3) à partir d'une séquence binaire dans le microcontrôleur (5).

6. Procédé selon l'une des revendications précédentes, **caractérisé en ce que** l'énergie pour la transmission des blocs de données (7, 8) est soutirée du module photovoltaïque (1, 2) lui-même.

7. Procédé selon la revendication 4, **caractérisé en ce que** le bloc de données (7, 8) est constitué d'éléments de données (11, 31, 6) individuels.

8. Procédé selon la revendication 7, **caractérisé en ce que** le bloc de données (7, 8) présente des éléments de données (11) pour identifier les modules photovoltaïques (1, 2) respectifs.

9. Procédé selon la revendication 7 ou 8, **caractérisé en ce que** le bloc de données (7, 8) présente des éléments de données (31) concernant les paramètres d'état des modules photovoltaïques (1, 2) respectifs.

10. Procédé selon la revendication 9, **caractérisé en ce que** le paramètre d'état défini est la tension électrique.

11. Procédé selon l'une des revendications 7 à 10, **caractérisé en ce que** le bloc de données (7, 8) présente des éléments de données (6) pour un contrôle de plausibilité.

12. Procédé selon l'une des revendications précédentes, **caractérisé en ce que** la séquence des caractères ou la séquence des bits à l'intérieur du bloc de données (7, 8) est générée selon le principe pseudo-aléatoire.

13. Procédé selon l'une des revendications précédentes, **caractérisé en ce que** la transmission des blocs de données (7, 8) respectifs s'effectue dans des intervalles de temps fixés, notamment restant identiques.

14. Procédé selon l'une des revendications précédentes, **caractérisé en ce que** le contrôle de la présence de blocs de données (7, 8) avec lesquels a eu lieu une influence dommageable, notamment une collision, est effectué du côté d'une unité d'interprétation (10) par un contrôle de plausibilité au moyen de l'élément de données (6).

15. Procédé selon l'une des revendications précédentes, **caractérisé en ce que** le numéro de série de chaque module photovoltaïque (1) est utilisé pour initialiser la formation de la séquence de caractères à l'intérieur du bloc de données.

16. Procédé selon l'une des revendications précédentes, **caractérisé en ce qu'**une mesure du courant continu est effectuée dans une unité d'interprétation (10) commune.

17. Procédé selon l'une des revendications précédentes, **caractérisé en ce qu'**une mesure de la capacité est effectuée dans l'unité d'interprétation (10) commune.

18. Procédé selon l'une des revendications précédentes, **caractérisé en ce qu'**une mesure de la tension est effectuée.

19. Procédé selon l'une des revendications précédentes, **caractérisé en ce qu'**une mesure de la capacité est effectuée.

20. Procédé selon l'une des revendications précédentes, **caractérisé en ce que** le paramètre d'état déterminé est la tension, la température et/ou l'intensité du courant.

21. Module photovoltaïque pour mettre en oeuvre le procédé selon l'une des revendications précédentes, comprenant
au moins une, de préférence une pluralité de cellules photovoltaïques (9) interconnectées entre elles, un coffret de connexion (14, 15) pour relier les cellules photovoltaïques (9) avec des moyens de ligne électriques (3, 4), un dispositif de contrôle (12) qui détermine des paramètres d'état du module photovoltaïque (1) concerné et injecte ceux-ci dans les moyens de ligne électriques (3, 4) sous la forme de blocs de données (7) indépendamment de l'injection de blocs de données (8) de dispositifs de contrôle (13) d'autres modules photovoltaïques (2), le dispositif de contrôle (12, 13) comprend un microcontrôleur (5) qui procède à la transmission des blocs de données (7, 8) au moyen de la modulation du courant disponible dans les moyens de ligne électriques (3, 4), et le microcontrôleur (5) présente un dispositif de mesure de la tension, de mesure de la température et/ou de mesure de l'intensité du courant, **caractérisé en ce que**
le dispositif de contrôle (12, 13) comprend un circuit shunt pour la modulation du courant.

22. Arrangement pour générer un courant électrique à partir de l'énergie solaire, comprenant une pluralité de modules photovoltaïques (1, 2), des moyens de liaison (3, 4) qui sont conçus pour relier en série les modules photovoltaïques (1, 2) individuels, un dispositif de contrôle (12, 13) destiné à acquérir des paramètres d'état de chaque module photovoltaïque (1, 2) étant associé au module photovoltaïque correspondant,
une unité d'interprétation (10) qui est prévue pour recevoir et traiter les signaux du dispositif de contrôle (12, 13), les signaux de chaque dispositif de contrôle (12 ou 13) étant générés sous la forme de blocs de données (7 ou 8), et
les signaux du dispositif de contrôle (par exemple 12) correspondant étant injectés dans les moyens de ligne électriques (3) indépendamment de l'injection de blocs de données (par exemple 8) d'autres dispositifs de contrôle (par exemple 13),
de sorte que la probabilité de collision des blocs de données (7 ou 8) de différents modules photovoltaïques (1 ou 2) est supérieure à 0 et chaque microcontrôleur (5) attend pendant un temps de retard $T_w$ à générer de manière aléatoire jusqu'à ce qu'un bloc de données (7, 8) soit injecté dans les moyens de ligne électriques (3), **caractérisé en ce que**
le temps de retard aléatoire moyen $\Delta T_W$ remplit la condition suivante

$$\Delta T_w \geq N \cdot T_D / \Delta C_R$$

où N désigne le nombre de modules photovoltaïques dans la série, $T_D$ le temps nécessaire pour la transmission d'un bloc de données et $\Delta C_R$ le taux d'erreurs moyen en raison d'une collision des blocs de données.

23. Arrangement selon la revendication 22, **caractérisé en ce que** les blocs de données (7, 8) sont soumis à un contrôle de plausibilité dans l'unité d'interprétation (10).

24. Arrangement selon la revendication 23, **caractérisé en ce que** l'unité d'interprétation (10) comprend un processeur de signal mélangé qui reçoit les blocs de données et effectue une interprétation au moyen d'une détection des impulsions de courant.

20

26

PV generator

PVMSS

1    14

9

Junction box

12
PVMB

Junction box

PVMB

PVMSS
27 data
core

Regulated
Voltage
source                25

~3

~4

2  15

Junction box

13
PVMB

Junction box

PVMB

16

17

18

19

10

COM port      21

ETHERNET
opt              22

WiFi
opt              23

GSM
opt              24

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10136147 B4
- WO 2008125915 A